# EUROPEAN PATENT APPLICATION

(11) **EP 4 712 602 A1**
(43) Date of publication of application: **18.03.2026**
(21) Application number: 23936004.3
(22) Date of filing: 08.05.2023
(51) Int. Cl.: H04W 64/00, H04W 24/10, H04W 4/029

(54) **COMMUNICATION METHODS, APPARATUSES AND DEVICES, AND STORAGE MEDIUMS**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2023/092850
(87) International publication number: WO 2024/229676

(57) **Abstract**

The present disclosure relates to communication methods, apparatuses and devices, and storage mediums. A method comprises: sending first information, the first information comprising a carrier phase measurement value and a timestamp. The present disclosure reports the timestamp corresponding to the carrier phase measurement value, so as to indicate a time position for carrier phase measurement, improving carrier phase-based positioning precision.

## Description

### TECHNICAL FIELD

The present disclosure relates to the technical field of communication, and in particular, to a communication method and apparatus, a device, and a storage medium.

### BACKGROUND

In the related art, positioning methods based on carrier phase are being researched to improve positioning accuracy. In the carrier phase-based positioning method, the content that needs to be measured and reported includes at least one of the fractional part and the integer number of the carrier. The fractional part represents the part less than one full cycle, such as a measurement value at a certain moment. The integer cycle number represents the number of exact full cycles.

### SUMMARY

To overcome the problems existing in the related art, the present disclosure provides a communication method and apparatus, a device and a storage medium.

According to a first aspect of the embodiments of the present disclosure, a communication method is provided. The method is executed by a first device, and includes: sending first information, where the first information includes a carrier phase measurement value and a time stamp.

According to a second aspect of the embodiments of the present disclosure, a communication method is provided. The method is executed by a second device, and includes: receiving first information sent by a first device, where the first information includes a carrier phase measurement value and a time stamp.

According to a third aspect of the embodiments of the present disclosure, a communication apparatus is provided, and the apparatus includes: a sending module, configured to send first information, where the first information includes a carrier phase measurement value and a time stamp.

According to a fourth aspect of the embodiments of the present disclosure, a communication apparatus is provided, and the apparatus includes: a receiving module configured to receive first information sent by a first device, where the first information includes a carrier phase measurement value and a time stamp.

According to a fifth aspect of the embodiments of the present disclosure, a communication device is provided, including: a processor; and a memory for storing instructions executable by the processor; where the processor is configured to execute the first aspect and any one of the methods in the first aspect.

According to a sixth aspect of the embodiments of the present disclosure, a communication device is provided, including: a processor; and a memory for storing instructions executable by the processor; where the processor is configured to execute the second aspect and any one of the methods in the second aspect.

According to a seventh aspect of the embodiments of the present disclosure, a non-transitory computer-readable storage medium is provided, where the instructions in the storage medium, when executed by a processor of a first device, causes the first device to execute the first aspect and any one of the methods in the first aspect.

According to an eighth aspect of the embodiments of the present disclosure, a non-transitory computer-readable storage medium is provided, where the instructions in the storage medium, when executed by a processor of a second device, causes the second device to execute the second aspect and any one of the methods in the second aspect.

The technical solutions provided by the embodiments of the present disclosure may include the following beneficial effects: by reporting the time stamp corresponding to the carrier phase measurement value, the time position of the carrier phase measurement is indicated, thereby improving the accuracy of carrier phase-based positioning.

It is to be understood that the foregoing general description and the following detailed description are exemplary and explanatory only, and do not limit the present disclosure.

### BRIEF DESCRIPTION OF THE DRAWINGS

The accompanying drawings herein, which are incorporated in and constitute a part of the specification, illustrate embodiments consistent with the present disclosure and are used in conjunction with the specification to explain principles of the present disclosure.
FIG. 1 is a schematic diagram of a wireless communication system shown according to an exemplary embodiment.
FIG. 2 is a flow chart of a communication method shown according to an exemplary embodiment.
FIG. 3 is a flow chart of another communication method shown according to an exemplary embodiment.
FIG. 4 is a flow chart of still another communication method shown according to an exemplary embodiment.
FIG. 5 is a flow chart of yet another communication method shown according to an exemplary embodiment.
FIG. 6 is a schematic diagram of a communication apparatus shown according to an exemplary embodiment.
FIG. 7 is a schematic diagram of another communication apparatus shown according to an exemplary embodiment.
FIG. 8 is a schematic diagram of a communication device shown according to an exemplary embodiment.
FIG. 9 is a schematic diagram of another communication device shown according to an exemplary embodiment.

### DETAILED DESCRIPTION

Exemplary embodiments are be described in detail herein, examples of which are represented in the accompanying drawings. When the following description relates to the drawings, the same numerals in different accompanying drawings represent the same or similar elements unless otherwise indicated. The implementations described in the following exemplary embodiments do not represent all implementations consistent with the embodiments of the present disclosure.

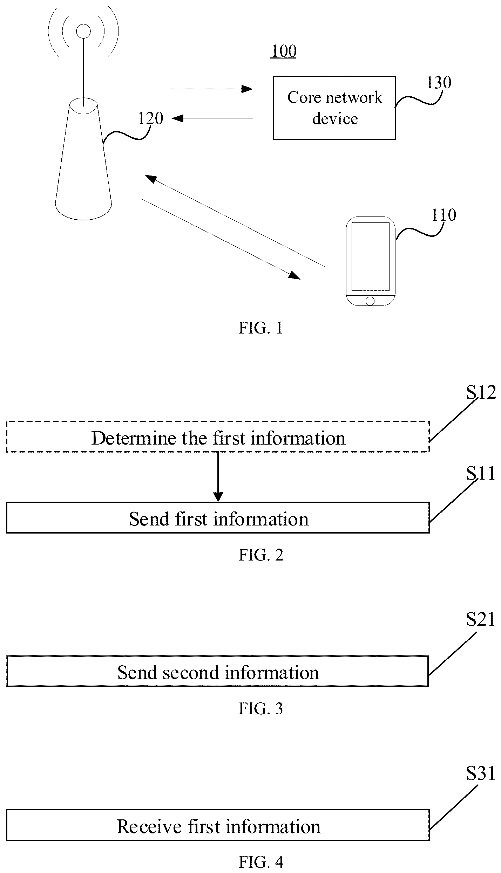

The communication method involved in the present disclosure may be applied to the wireless communication system 100 shown in FIG. 1. The network system may include a terminal 110, an access network device 120, and a core network device 130. It may be understood that the wireless communication system shown in FIG. 1 is merely for schematic illustration, and the wireless communication system may further include other network devices, such as a wireless relay device and a wireless backhaul device, which are not shown in FIG. 1. The quantity of the access network devices, the quantity of the core network devices and the quantity of the terminals included in the wireless communication system are not limited in the embodiments of the present disclosure.

It can be further understood that the wireless communication system in the embodiments of the present disclosure is a network that provides wireless communication functions. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. According to capacities, speeds, delays and other factors of different networks, the networks may be divided into a 2th generation (2G) network, a 3rd generation (3G) network, a 4th generation (4G) network, or a future evolved network, such as a 5th generation (5G) wireless communication system network, and the 5G network may also be referred to as new radio (NR). For convenience of description, the wireless communication network may be referred to as network for short sometimes in the present disclosure.

Furthermore, the terminal 110 involved in the disclosure may also be referred to as terminal device, user equipment (UE), mobile station (MS), mobile terminal (MT), etc., which is a device that provides voice and/or data connectivity for a user. For instance, the terminal may be a handheld device, a vehicle-mounted device, etc. having a wireless connection function. At present, some instances of the terminal include a mobile phone, a pocket personal computer (PPC), a palm computer, a personal digital assistant (PDA), a laptop computer, a tablet computer, a wearable device, and a vehicle-mounted device. In addition, in a case of a vehicle-to-everything (V2X) communication system, the terminal device may be a vehicle-mounted device. It should be understood that in the embodiments of the present disclosure, specific technologies and specific device forms used for the terminal are not limited.

Furthermore, the network device 120 involved in the disclosure may also be referred to as radio access network device. The radio access network device may be a base station, an evolved node B (eNB), a home base station, an access point (AP) in a wireless fidelity (WIFI) system, a wireless relay node, a wireless backhaul node, a transmission point (TP) or a transmission and reception point (TRP), etc., or a generation node B (gNB) in an NR system, or an assembly or part of devices, etc. that constitute a base station. In addition, in a case of a vehicle-to-everything (V2X) communication system, the network device may be a vehicle-mounted device. It should be understood that in the embodiments of the present disclosure, specific technologies and specific device forms used for the network device are not limited.

Furthermore, the core network device 130 involved in the present disclosure may be a single device. The core network device may also be multiple devices or a group of devices. The core network device 130 may include any network element. The network element may be virtual or physical. The core network includes, for example, at least one of an evolved packet core (EPC), a 5G core network (5GCN), and a next generation core (NGC).

In the embodiments of the present disclosure, the terminal 110, the access network device 120, and the core network device 130 may adopt any feasible wireless communication technology to achieve mutual data transmission. The transmission channel corresponding to the data or control information sent by the terminal 110 to the access network device 120 is referred to as an uplink channel (uplink, UL), and the transmission channel corresponding to the data or control information sent by the access network device 120 to the terminal 110 is referred to as a downlink channel (downlink, DL). It should be understood that the access network device involved in the embodiments of the present disclosure may be a base station. Of course, the access network device may also be any other possible access network device, and the terminal may be any possible terminal, which is not limited by the present disclosure.

In the embodiments of the present disclosure, during the discussions on Release (Rel) 18, carrier phase-based positioning methods are being discussed to improve positioning accuracy. In the carrier phase-based positioning methods, the content that needs to be measured and reported includes at least one of the fractional part of the reference signal carrier phase and the integer cycle number of the reference signal carrier phase. The fractional part of the reference signal carrier phase refers to the fractional part that is less than one full cycle. For example, the measurement value at moment t may be the part of the difference between the carrier phase measured by the receiving end and the phase of the carrier transmitted by the transmitting end that is less than one cycle, or the part of the phase of the carrier transmitted by the transmitting end and received by the receiving end that is less than one cycle. The integer cycle number of the reference signal carrier phase corresponds to the data of exact full cycles.

However, in the carrier phase-based positioning solution, the terminal's phase-locked loop is required to perform phase locking and tracking on the carrier phase, and the carrier phase measured by the terminal or the TRP at different symbols varies significantly.

In some embodiments, when reporting positioning measurement results, a slot index and a subframe index may be reported. Then, the resource position of the corresponding measurement may be determined based on the positioning reference signal (PRS) resource set identity (ID) and/or resource ID, or based on the sounding reference signal (SRS) resource set ID and/or resource ID.

However, there is currently no definite conclusion on how to determine or indicate the symbol position corresponding to the carrier phase measurement value.

Therefore, the present disclosure provides a communication method and apparatus, a device and a storage medium. By reporting the time stamp corresponding to the carrier phase measurement value, the time position of the carrier phase measurement is further indicated, thereby improving the accuracy of carrier phase-based positioning.

FIG. 2 is a flow chart of a communication method shown according to an exemplary embodiment. As shown in FIG. 2, the method is performed by a first device and may include the following steps.

In step S11, first information is sent.

In some embodiments, the first device may send the first information, where the first information may include a carrier phase measurement value and a time stamp.

For example, the first device may send first information to the second device.

In some embodiments, the first device may be a terminal.

For example, the terminal may send the first information, where the first information includes the carrier phase measurement value and the time stamp, where the time stamp may be a time stamp corresponding to the carrier phase measurement value.

For example, the terminal sends the first information to a core network device.

In some embodiments, the first device may be an access network device.

For example, the access network device may send the first information. The first information includes the carrier phase measurement value and the time stamp. The time stamp may be a time stamp corresponding to the carrier phase measurement value.

For example, the access network device may send the first information to the core network device.

For example, the access network device may be a TRP.

For example, the TRP may send the first information, where the first information includes the carrier phase measurement value and the time stamp, where the time stamp may be a time stamp corresponding to the carrier phase measurement value.

For example, the TRP sends the first information to the core network device.

In some embodiments, the core network device may be a core network device for performing location management.

For example, the core network device is a location management function network element. The location management function network element may include a location server. The location server may be implemented in any of the following manners: a location management function (LMF), an enhanced serving mobile location centre (E-SMLC), a secure user plane location (SUPL), and a secure user plane location platform (SUPLLP).

In some embodiments, before S11, the method may further include the following steps:

In step S12, first information is determined.

In some embodiments, the first device may measure the carrier phase to obtain a carrier phase measurement value. The first device may also determine a time corresponding to the measurement of the carrier phase to obtain a time stamp.

In the present disclosure, by reporting the time stamp corresponding to the carrier phase measurement value, the time position of the carrier phase measurement is indicated, thereby improving the accuracy of carrier phase-based positioning.

In the communication method provided by the embodiment of the present disclosure, the time stamp includes a slot identifier, and a symbol corresponding to the carrier phase measurement value is a specified symbol.

In some embodiments, the time stamp may include the slot identifier. The symbol corresponding to the carrier phase measurement value is a specified symbol.

In some embodiments, the identifier may be an ID or an index.

For example, the time stamp includes a slot index. The symbol index corresponding to the carrier phase measurement value may be a specified value. It may be understood that the specified value may be used to indicate a specified symbol.

For example, the specified value may be a default value. The default value may be pre-set. For example, if the first information sent by the first device includes a slot identifier, the second device may determine the corresponding specified symbol based on the default value. The specified symbol is then determined to be the symbol corresponding to the carrier phase measurement value.

In the present disclosure, in the case that a slot identifier is reported, it is determined that the symbol corresponding to the carrier phase measurement value is a specified symbol, thereby indicating the time position of the carrier phase measurement and thus improving the accuracy of carrier phase-based positioning.

In the communication methods provided by the embodiments of the present disclosure, the specified symbol includes at least one of the following: the first symbol where the reference signal resource is located; the last symbol where the reference signal resource is located; the N-th symbol where the reference signal resource is located, where N is a positive integer greater than 1, and N is less than a total number of symbols where the reference signal resource is located; the first symbol of the slot corresponding to the slot identifier; the last symbol of the slot corresponding to the slot identifier; the M-th symbol of the slot corresponding to the slot identifier, where M is a positive integer greater than 1, and M is less than a total number of symbols of the slot corresponding to the slot identifier.

In some embodiments, the reference signal resource may include a downlink reference signal resource. For example, the downlink reference signal resource may be a downlink PRS resource.

Of course, the downlink reference signal resource may be the downlink reference signal resource included in the slot indicated by the slot identifier in the time stamp. For example, if the slot index in the time stamp indicates slot 1, then the downlink reference signal resource may be the downlink reference signal resource included in slot 1.

In some embodiments, the reference signal resource may further include an uplink reference signal resource. For example, the uplink reference signal resource may be an uplink SRS resource.

Of course, the uplink reference signal resource may be the uplink reference signal resource included in the slot indicated by the slot identifier in the time stamp. For example, if the slot index in the time stamp indicates slot 1, then the uplink reference signal resource may be the uplink reference signal resource included in slot 1.

In some embodiments, the specified symbol may include the first symbol where the downlink reference signal resource is located.

For example, the specified symbol is the first symbol where the downlink PRS resource is located. For example, if the slot index in the time stamp indicates slot 1, the specified symbol may be the first symbol where the downlink PRS resource is located in slot 1. It is assumed that the symbols where the downlink PRS resource is located in slot 1 include symbols 0 to 5 in slot 1, then the specified symbol may be symbol 0 in slot 1.

In some embodiments, the specified symbol may include the first symbol where the uplink reference signal resource is located.

For example, the specified symbol is the first symbol where the uplink SRS resource is located. For example, if the slot index in the time stamp indicates slot 1, the specified symbol may be the first symbol where the uplink SRS resource is located in slot 1. It is assumed that the symbols where the uplink SRS resource is located in slot 1 include symbols 0 to 5 in slot 1, then the specified symbol may be symbol 0 in slot 1.

In some embodiments, the specified symbol may include the last symbol where the downlink reference signal resource is located.

For example, the specified symbol is the last symbol where the downlink PRS resource is located. For example, if the slot index in the time stamp indicates slot 1, the specified symbol may be the first symbol where the downlink PRS resource is located in slot 1. It is assumed that the symbols where the downlink PRS resource is located in slot 1 include symbols 0 to 5 in slot 1, then the specified symbol may be symbol 5 in slot 1.

In some embodiments, the specified symbol may include the last symbol where the uplink reference signal resource is located.

For example, the specified symbol is the last symbol where the uplink SRS resource is located. For example, if the slot index in the time stamp indicates slot 1, the specified symbol may be the first symbol where the uplink SRS resource in slot 1 is located. It is assumed that the symbols where the uplink SRS resource is located in slot 1 include symbols 0 to 5 in slot 1, then the specified symbol may be symbol 5 in slot 1.

In some embodiments, the specified symbol may include the N-th symbol where the downlink reference signal resource is located, where N is a positive integer greater than 1, and N is less than the total number of symbols where the downlink reference signal resource is located.

For example, the specified symbol is the N-th symbol where the downlink PRS resource is located. It may be understood that the N-th symbol is any symbol other than the first and last symbol among the symbols where the downlink PRS resource is located. For example, if the slot index in the time stamp indicates slot 1, the specified symbol may be the N-th symbol where the downlink PRS resource is located in slot 1. It is assumed that the symbols where the downlink PRS resource is located in slot 1 include symbols 0 to 5 in slot 1, then the specified symbol may be symbol N in slot 1. Of course, in this case, N is greater than 1 and less than 5.

In some embodiments, the specified symbol may include the L-th symbol where the uplink reference signal resource is located, where L is a positive integer greater than 1, and L is less than the total number of symbols where the uplink reference signal resource is located.

For example, the specified symbol is the L-th symbol where the uplink SRS resource is located. It may be understood that the L-th symbol is any symbol other than the first and last symbols among the symbols where the uplink SRS resource is located. For example, if the slot index in the time stamp indicates slot 1, then the specified symbol may be the L-th symbol where the uplink SRS resource is located in slot 1. It is assumed that the symbols where the uplink SRS resource is located in slot 1 include symbols 0 to 5 in slot 1, then the designated symbol may be symbol L in slot 1. Of course, in this case, L is greater than 1 and less than 5.

It is worth noting that in the above embodiments, the reference signal resource included in the slot indicated by the slot identifier may include some or all symbols in the slot, which is not limited by the present disclosure. Of course, the same reference signal resource may also be located in multiple different slots, which is not limited by the present disclosure. However, it should be understood that if the above-mentioned specified symbol is determined based on the reference signal resource, then only the reference signal resource included in the slot corresponding to the slot identifier need to be considered.

In some embodiments, the specified symbol may include the first symbol of the slot corresponding to the slot identifier.

For example, the slot identifier corresponds to slot A, and the specified symbol is the first symbol in slot A.

In some embodiments, the specified symbol may include the last symbol of the slot corresponding to the slot identifier.

For example, the slot identifier corresponds to slot A, and the specified symbol is the last symbol in slot A.

In some embodiments, the specified symbol may include the M-th symbol of the slot corresponding to the slot identifier, where M is a positive integer greater than 1 and less than the total number of symbols in the slot corresponding to the slot identifier.

For example, the slot identifier corresponds to slot A, and the specified symbol is the M-th symbol in slot A. It can be understood that the M-th symbol is any symbol in slot A other than the first symbol and the last symbol.

In some embodiments, the corresponding specified symbol may be determined under different conditions.

For example, in the case that condition 1 is met, the specified symbol is the first symbol in the downlink reference signal resource. For another example, in the case that condition 2 is met, the specified symbol is the last symbol in the downlink reference signal resource. By analogy, different configuration scenarios of the aforementioned specified symbols may each correspond to one condition. And when the corresponding condition is satisfied, an appropriate specified symbol is determined. Of course, the setting of specific conditions may be configured according to actual circumstances, and the present disclosure does not impose limitations thereon.

It should be understood that when multiple conditions are configured, the specified symbol may include any two, three, four, five, or six of the aforementioned types. For the convenience of description, details will not be repeated herein in the present disclosure.

The present disclosure provides multiple possible scenarios for the specified symbol, so as to report the time stamp corresponding to the carrier phase measurement value, thereby indicating the time position of the carrier phase measurement and thus improving the accuracy of carrier phase-based positioning.

In the communication method provided by the embodiments of the present disclosure, the time stamp includes a slot identifier and a symbol identifier, and the symbol corresponding to the carrier phase measurement value is the symbol corresponding to the symbol identifier.

In some embodiments, the time stamp may include a slot identifier and a symbol identifier, where the symbol corresponding to the carrier phase measurement value is the symbol corresponding to the symbol identifier.

It may be understood that the symbol indicated by the symbol identifier is the symbol within the slot corresponding to the slot identifier. For example, if the slot identifier indicates slot A and the symbol identifier indicates symbol b, then symbol b is the symbol b within slot A.

In some embodiments, the identifier may be an ID or an index.

For example, the time stamp includes a slot index and a symbol index. The symbol corresponding to the carrier phase measurement value may be the symbol indicated by the symbol index. In other words, the symbol corresponding to the carrier phase measurement value may be directly indicated by the symbol index.

For example, the symbol index may be an index counted from a start symbol in a slot. Typically, one slot includes 14 symbols, so the value of the symbol index may range from 0 to 13.

For another example, the symbol index may be an offset calculated starting from the first symbol or the last symbol occupied by the reference signal resource.

For example, the symbol index indicates that the offset is c. In the case that the reference signal resource is a downlink reference signal resource, the symbol corresponding to the carrier phase measurement value may be the c-th symbol counted forward from the first symbol among the symbols occupied by the downlink PRS resource. The symbol corresponding to the carrier phase measurement value may also be the c-th symbol counted backward from the last symbol among the symbols occupied by the downlink PRS resource. In the case that the reference signal resource is an uplink reference signal resource, the symbol corresponding to the carrier phase measurement value may also be the c-th symbol counted forward from the first symbol among the symbols occupied by the uplink SRS resource. The symbol corresponding to the carrier phase measurement value may also be the c-th symbol counted backward from the last symbol among the symbols occupied by the uplink SRS resource.

In the present disclosure, in the case that the slot identifier and the symbol identifier are reported, it is determined that the symbol corresponding to the carrier phase measurement value is the specified symbol, thereby indicating the time position of the carrier phase measurement and thus improving the accuracy of carrier phase-based positioning.

In the communication methods provided by the embodiments of the present disclosure, the first device is a terminal, and the carrier phase measurement value includes at least one of the following: a DL reference signal carrier phase (RSCP); and a DL reference signal carrier phase difference (RSCPD).

In some embodiments, the first device may be a terminal. The carrier phase measurement value may include the DL RSCP.

In some embodiments, the first device may be a terminal. The carrier phase measurement value may include the DL RSCPD.

In some embodiments, the first device may be a terminal. The carrier phase measurement value may include the DL RSCP and the DL RSCPD.

The present disclosure provides multiple possible forms of carrier phase measurement values, so as to report the time stamp corresponding to the carrier phase measurement value, thereby indicating the time position of the carrier phase measurement and thus improving the accuracy of carrier phase-based positioning.

In the communication methods provided by the embodiments of the present disclosure, the first device is an access network device, and the carrier phase measurement value includes a UL RSCP.

In some embodiments, the first device may be an access network device. The carrier phase measurement value may include UL RSCP. For example, the access network device may be a TRP.

The present disclosure provides a possible form of the carrier phase measurement value, so as to report the time stamp corresponding to the carrier phase measurement value, thereby indicating the time position of the carrier phase measurement and thus improving the accuracy of carrier phase-based positioning.

In the communication methods provided in the embodiments of the present disclosure, FIG. 3 is a flow chart of another communication method shown according to an exemplary embodiment. As shown in FIG. 3, the method may further include the following steps.

In step S21, the second information is sent.

In some embodiments, the first device may send second information, where the second information may be used to indicate the terminal's capability for carrier phase measurement.

In some embodiments, the first device is a terminal, and the second device may be an access network device or a core network device.

For example, the terminal sends the second information to the core network device to inform the core network device of the terminal's capability for carrier phase measurement.

For another example, the terminal sends the second information to the access network device. The access network device may forward the second information forwarded by the TRP to the core network device to inform the core network device of the terminal's capability for carrier phase measurement.

For another example, the terminal sends the second information to the TRP. The TRP may forward the received second information to the base station corresponding to the TRP. The base station may further forward the second information forwarded by the TRP to the core network device to inform the core network device of the terminal's capability for carrier phase measurement.

In the present disclosure, the terminal's capability for carrier phase measurement may also be reported, which enables adaptation to terminals with different capabilities and allows all such terminals to indicate the time position of the carrier phase measurement, thereby improving the accuracy of carrier phase-based positioning.

In the communication methods provided by the embodiments of the present disclosure, the second information includes at least one of the following: a number of symbols required for obtaining the carrier phase measurement value; and a minimum number of symbols occupied by the downlink reference signal.

In some embodiments, the second information may include the number of symbols required for the terminal to obtain the carrier phase measurement value.

For example, it refers to how many symbols the terminal needs to go through to lock the phase of the downlink reference signal. That is to say, starting from the first symbol of the downlink reference signal, the number of the symbol at which the carrier phase measurement value can finally be obtained. This number may be indicated through the second information.

For example, if the terminal may finally obtain the carrier phase measurement value at the M-th symbol, then the number of symbols required to obtain the carrier phase measurement value, which is included in the second information, may be M.

For another example, the number of symbols required for the terminal to obtain the carrier phase measurement value may also be determined based on a specified sub-carrier space (SCS). For example, the SCS may be 15 KHz, 30 KHz, or the like.

In some embodiments, the second information may include the minimum number of symbols occupied by the downlink reference signal.

For example, the second information may include the minimum number of symbols occupied by the downlink reference signal. The symbol on which the terminal can lock the phase can be determined based on this minimum number of symbols. The reason for this is that if the terminal can obtain the carrier phase measurement value at the 4th symbol, the minimum number of symbols occupied by the reference signal needs to be 4.

In some embodiments, the second information may include the number of symbols required for the terminal to obtain the carrier phase measurement value and the minimum number of symbols occupied by the downlink reference signal.

The present disclosure provides the possible content that the second information may include, which can indicate the time position of the carrier phase measurement, thereby improving the accuracy of carrier phase-based positioning.

In the communication methods provided by the embodiments of the present disclosure, the second information further includes at least one of the following: a bandwidth part (BWP); an SCS; and an absolute value of a time length.

In some embodiments, the second information may further include the BWP.

In some embodiments, the second information may further include the SCS.

In some embodiments, the second information may further include the absolute value of the time length.

In some embodiments, the second information may further include: the BWP and the SCS; or, the BWP and the absolute value of time length; or, the SCS and the absolute value of time length; or, the BWP, the SCS and the absolute value of time length.

It should be understood that if the terminal reports the number of symbols, then the absolute value of the time length may be different for different numbers of symbols under different SCSs.

The present disclosure provides the possible content that the second information may include, which can indicate the time position of the carrier phase measurement, thereby improving the accuracy of carrier phase-based positioning.

Based on the same concept, the present disclosure further provides a communication method performed by a network device.

FIG. 4 is a flow chart of another communication method shown according to an exemplary embodiment. As shown in FIG. 4, the method is performed by a second device and may include the following steps.

In step S11, first information sent by a first device is received.

In some embodiments, the second device may receive first information sent by the first device, where the first information may include a carrier phase measurement value and a time stamp.

In some embodiments, the first device may be a terminal, and the second device may be a core network device.

For example, the core network device may receive first information sent by the terminal, where the first information includes the carrier phase measurement value and the time stamp, where the time stamp may be a time stamp corresponding to the carrier phase measurement value.

In some embodiments, the first device may be an access network device, and the second device may be a core network device.

For example, the core network device may receive first information sent by the access network device, where the first information includes the carrier phase measurement value and the time stamp, where the time stamp may be a time stamp corresponding to the carrier phase measurement value.

For example, the access network device may be a TRP.

In some embodiments, the core network device may be a core network device for performing location management.

For example, the core network device is a location management function network element. The location management function network element may include a location server. The location server may be implemented in any of the following manners: an LMF, an E-SMLC, an SUPL, and an SUPLLP.

In the present disclosure, by reporting the time stamp corresponding to the carrier phase measurement value, the time position of the carrier phase measurement is indicated, thereby improving the accuracy of carrier phase-based positioning.

In the communication method provided by the embodiment of the present disclosure, the time stamp includes a slot identifier, and a symbol corresponding to the carrier phase measurement value is a specified symbol.

It may be understood that for various embodiments where the timestamp includes a slot identifier and the symbol corresponding to the carrier phase measurement value is a specified symbol, reference may be made to the descriptions of the corresponding embodiments on the terminal side and associated embodiments thereof, and details will not be repeated herein in the present disclosure.

In the present disclosure, in the case that a slot identifier is reported, it is determined that the symbol corresponding to the carrier phase measurement value is a specified symbol, thereby indicating the time position of the carrier phase measurement and thus improving the accuracy of carrier phase-based positioning.

In the communication methods provided by the embodiments of the present disclosure, the specified symbol includes at least one of the following: the first symbol where the reference signal resource is located; the last symbol where the reference signal resource is located; the N-th symbol where the reference signal resource is located, where N is a positive integer greater than 1, and N is less than a total number of symbols where the reference signal resource is located; the first symbol of the slot corresponding to the slot identifier; the last symbol of the slot corresponding to the slot identifier; the M-th symbol of the slot corresponding to the slot identifier, where M is a positive integer greater than 1, and M is less than a total number of symbols of the slot corresponding to the slot identifier.

It may be understood that for various embodiments regarding the specified symbol, reference may be made to the descriptions of the corresponding embodiments on the terminal side and associated embodiments thereof, and details will not be repeated herein in the present disclosure.

The present disclosure provides multiple possible scenarios for the specified symbol, so as to report the time stamp corresponding to the carrier phase measurement value, thereby indicating the time position of the carrier phase measurement and thus improving the accuracy of carrier phase-based positioning.

In the communication method provided by the embodiments of the present disclosure, the time stamp includes a slot identifier and a symbol identifier, and the symbol corresponding to the carrier phase measurement value is the symbol corresponding to the symbol identifier.

It may be understood that for various embodiments where the time stamp includes a slot identifier and a symbol identifier, and the symbol corresponding to the carrier phase measurement value is the symbol corresponding to the symbol identifier, reference may be made to the descriptions of the corresponding embodiments on the terminal side and associated embodiments thereof, and details will not be repeated herein in the present disclosure.

In the present disclosure, in the case that the slot identifier and the symbol identifier are reported, it is determined that the symbol corresponding to the carrier phase measurement value is the specified symbol, thereby indicating the time position of the carrier phase measurement and thus improving the accuracy of carrier phase-based positioning.

In the communication methods provided by the embodiment of the present disclosure, the first device is a terminal, the second device is a core network device, and the carrier phase measurement value includes at least one of the following: a DL RSCP; and a DL RSCPD.

In some embodiments, the first device may be a terminal, and the second device may be a core network device.

It may be understood that for various embodiment regarding the carrier phase measurement value, reference may be made to the descriptions of the corresponding embodiments on the terminal side and associated embodiments thereof, and details will not be repeated herein in the present disclosure.

The present disclosure provides multiple possible forms of carrier phase measurement values, so as to report the time stamp corresponding to the carrier phase measurement value, thereby indicating the time position of the carrier phase measurement and thus improving the accuracy of carrier phase-based positioning.

In the communication methods provided by the embodiments of the present disclosure, the first device is an access network device, the second device may be a core network device, and the carrier phase measurement value includes a UL RSCP.

In some embodiments, the first device may be an access network device, and the second device may be a core network device.

For example, the access network device may be a TRP.

It may be understood that for various embodiment regarding the carrier phase measurement value, reference may be made to the descriptions of the corresponding embodiments on the terminal side and associated embodiments thereof, and details will not be repeated herein in the present disclosure.

The present disclosure provides a possible form of the carrier phase measurement value, so as to report the time stamp corresponding to the carrier phase measurement value, thereby indicating the time position of the carrier phase measurement and thus improving the accuracy of carrier phase-based positioning.

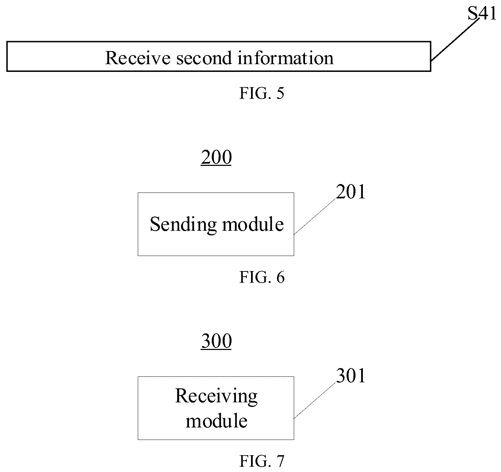

In the communication methods provided by the embodiments of the present disclosure, FIG. 5 is a flow chart of another communication method shown according to an exemplary embodiment. As shown in FIG. 5, the first device is a terminal, and the second device is an access network device or a core network device. The method may further include the following steps.

In step S41, second information is received.

In some embodiments, the second device may receive second information sent by the first device, where the second information may be used to indicate the terminal's capability for carrier phase measurement.

In some embodiments, the first device is a terminal, and the second device may be an access network device or a core network device.

For example, the core network device receives the second information sent by the terminal, so that the core network device can know the terminal's capability for carrier phase measurement.

For another example, the access network device may receive the second information sent by the terminal, and the access network device may further forward the received second information to the core network device to inform the core network device of the terminal's capability for carrier phase measurement.

For another example, the TRP may receive the second information sent by the terminal. The TRP may further forward the received second information to the base station corresponding to the TRP. The base station may further forward the second information forwarded by the TRP to the core network device to inform the core network device of the terminal's capability for carrier phase measurement.

In the present disclosure, the terminal's capability for carrier phase measurement may also be reported, which enables adaptation to terminals with different capabilities and allows all such terminals to indicate the time position of the carrier phase measurement, thereby improving the accuracy of carrier phase-based positioning.

In the communication methods provided by the embodiments of the present disclosure, the second information includes at least one of the following: a number of symbols required for obtaining the carrier phase measurement value; and a minimum number of symbols occupied by the downlink reference signal.

It may be understood that for various embodiments regarding the second information, reference may be made to the descriptions of the corresponding embodiments on the terminal side and associated embodiments thereof, and details will not be repeated herein in the present disclosure.

The present disclosure provides the possible content that the second information may include, which can indicate the time position of the carrier phase measurement, thereby improving the accuracy of carrier phase-based positioning.

In the communication methods provided by the embodiments of the present disclosure, the second information further includes at least one of the following: a BWP; an SCS; and an absolute value of a time length.

It may be understood that for various embodiments regarding the second information, reference may be made to the descriptions of the corresponding embodiments on the terminal side and associated embodiments thereof, and details will not be repeated herein in the present disclosure.

The present disclosure provides the possible content that the second information may include, which can indicate the time position of the carrier phase measurement, thereby improving the accuracy of carrier phase-based positioning.

It should be noted that those skilled in the art can understand that various implementations/embodiments involved in the embodiments of the disclosure can be used in combination with the foregoing embodiments, or can be used independently. Whether it is used independently or in combination with the foregoing embodiments, the implementation principles thereof are similar. During implementation of the disclosure, some embodiments are described in an implementation manner of being used together. Certainly, those skilled in the art can understand that such illustrations are not intended to limit embodiments of the disclosure.

Based on the same concept, the embodiments of the present disclosure further provide a communication apparatus and device.

It can be understood that in order to implement the above functions, the communication apparatus and device provided in the embodiments of the present disclosure include corresponding hardware structures and/or software modules for executing various functions. With reference to the units and algorithm steps of the examples disclosed in the embodiments of the present disclosure, the embodiments of the present disclosure can be implemented in the form of hardware or a combination of hardware and computer software. Whether a certain function is executed in the form of hardware or in the way that computer software drives the hardware depends on the specific application and design constraints of the technical solution. Those skilled in the art can implement the described functions through different methods for each particular application, but such implementation should not be considered beyond the scope of the technical solutions of the embodiments of the disclosure.

FIG. 6 is a schematic diagram of a communication apparatus shown according to an exemplary embodiment. Referring to FIG. 6, the apparatus 200 includes: a sending module 201, configured to send first information, where the first information includes a carrier phase measurement value and a time stamp.

In the present disclosure, by reporting the time stamp corresponding to the carrier phase measurement value, the time position of the carrier phase measurement is indicated, thereby improving the accuracy of carrier phase-based positioning.

In some implementations, the time stamp includes a slot identifier, and a symbol corresponding to the carrier phase measurement value is a specified symbol.

In the present disclosure, in the case that a slot identifier is reported, it is determined that the symbol corresponding to the carrier phase measurement value is a specified symbol, thereby indicating the time position of the carrier phase measurement and thus improving the accuracy of carrier phase-based positioning.

In some embodiments, the specified symbol includes at least one of the following: a first symbol where a reference signal resource is located; a last symbol where the reference signal resource is located; an N-th symbol where the reference signal resource is located, where N is a positive integer greater than 1, and N is less than a total number of symbols where the reference signal resource is located; a first symbol of a slot corresponding to the slot identifier; a last symbol of the slot corresponding to the slot identifier; and an M-th symbol of the slot corresponding to the slot identifier, where M is a positive integer greater than 1, and M is less than a total number of symbols of the slot corresponding to the slot identifier.

The present disclosure provides multiple possible scenarios for the specified symbol, so as to report the time stamp corresponding to the carrier phase measurement value, thereby indicating the time position of the carrier phase measurement and thus improving the accuracy of carrier phase-based positioning.

In some implementations, the time stamp includes a slot identifier and a symbol identifier, and a symbol corresponding to the carrier phase measurement value is a symbol corresponding to the symbol identifier.

In the present disclosure, in the case that the slot identifier and the symbol identifier are reported, it is determined that the symbol corresponding to the carrier phase measurement value is the specified symbol, thereby indicating the time position of the carrier phase measurement and thus improving the accuracy of carrier phase-based positioning.

In some implementations, the first device is a terminal, and the carrier phase measurement value includes at least one of the following: a DL RSCP; and a DL RSCPD.

The present disclosure provides multiple possible forms of carrier phase measurement values, so as to report the time stamp corresponding to the carrier phase measurement value, thereby indicating the time position of the carrier phase measurement and thus improving the accuracy of carrier phase-based positioning.

In some implementations, the first device is an access network device, and the carrier phase measurement value includes a UL RSCP.

The present disclosure provides a possible form of the carrier phase measurement value, so as to report the time stamp corresponding to the carrier phase measurement value, thereby indicating the time position of the carrier phase measurement and thus improving the accuracy of carrier phase-based positioning.

In some implementations, the sending module 201 is further configured to: send second information, where the second information is used to indicate a capability of the terminal to measure a carrier phase.

In the present disclosure, the terminal's capability for carrier phase measurement may also be reported, which enables adaptation to terminals with different capabilities and allows all such terminals to indicate the time position of the carrier phase measurement, thereby improving the accuracy of carrier phase-based positioning.

In some implementations, the second information includes at least one of the following: a number of symbols required for obtaining the carrier phase measurement value; and a minimum number of symbols occupied by the downlink reference signal.

The present disclosure provides the possible content that the second information may include, which can indicate the time position of the carrier phase measurement, thereby improving the accuracy of carrier phase-based positioning.

In some implementations, the second information further includes at least one of the following: a BWP; an SCS; and an absolute value of a time length.

The present disclosure provides the possible content that the second information may include, which can indicate the time position of the carrier phase measurement, thereby improving the accuracy of carrier phase-based positioning.

FIG. 7 is a schematic diagram of another communication apparatus shown according to an exemplary embodiment. Referring to FIG. 7, the apparatus 300 includes: a receiving module 301 configured to receive first information sent by a first device, where the first information includes a carrier phase measurement value and a time stamp.

In the present disclosure, by reporting the time stamp corresponding to the carrier phase measurement value, the time position of the carrier phase measurement is indicated, thereby improving the accuracy of carrier phase-based positioning.

In some implementations, the time stamp includes a slot identifier, and a symbol corresponding to the carrier phase measurement value is a specified symbol.

In the present disclosure, in the case that a slot identifier is reported, it is determined that the symbol corresponding to the carrier phase measurement value is a specified symbol, thereby indicating the time position of the carrier phase measurement and thus improving the accuracy of carrier phase-based positioning.

In some implementations, the specified symbol includes at least one of the following: the first symbol where the reference signal resource is located; the last symbol where the reference signal resource is located; the N-th symbol where the reference signal resource is located, where N is a positive integer greater than 1, and N is less than a total number of symbols where the reference signal resource is located; the first symbol of the slot corresponding to the slot identifier; the last symbol of the slot corresponding to the slot identifier; the M-th symbol of the slot corresponding to the slot identifier, where M is a positive integer greater than 1, and M is less than a total number of symbols of the slot corresponding to the slot identifier.

The present disclosure provides multiple possible scenarios for the specified symbol, so as to report the time stamp corresponding to the carrier phase measurement value, thereby indicating the time position of the carrier phase measurement and thus improving the accuracy of carrier phase-based positioning.

In some implementations, the time stamp includes a slot identifier and a symbol identifier, and a symbol corresponding to the carrier phase measurement value is a symbol corresponding to the symbol identifier.

In the present disclosure, in the case that the slot identifier and the symbol identifier are reported, it is determined that the symbol corresponding to the carrier phase measurement value is the specified symbol, thereby indicating the time position of the carrier phase measurement and thus improving the accuracy of carrier phase-based positioning.

In some implementations, the first device is a terminal, the second device is a core network device, and the carrier phase measurement value includes at least one of the following: a DL RSCP; and a DL RSCPD.

The present disclosure provides multiple possible forms of carrier phase measurement values, so as to report the time stamp corresponding to the carrier phase measurement value, thereby indicating the time position of the carrier phase measurement and thus improving the accuracy of carrier phase-based positioning.

In some implementation manners, the first device is a transmission and receiving point access network device, the second device is a core network device, and the carrier phase measurement value includes a UL RSCP.

The present disclosure provides a possible form of the carrier phase measurement value, so as to report the time stamp corresponding to the carrier phase measurement value, thereby indicating the time position of the carrier phase measurement and thus improving the accuracy of carrier phase-based positioning.

In some implementations, the first device is a terminal, the second device is an access network device or a core network device, and the receiving module 301 is further configured to: receive second information, where the second information is used to indicate a capability of the terminal to measure a carrier phase.

In the present disclosure, the terminal's capability for carrier phase measurement may also be reported, which enables adaptation to terminals with different capabilities and allows all such terminals to indicate the time position of the carrier phase measurement, thereby improving the accuracy of carrier phase-based positioning.

In some implementations, the second information includes at least one of the following: a number of symbols required for obtaining the carrier phase measurement value; and a minimum number of symbols occupied by the downlink reference signal.

The present disclosure provides the possible content that the second information may include, which can indicate the time position of the carrier phase measurement, thereby improving the accuracy of carrier phase-based positioning.

In some embodiments, the second information further includes at least one of the following: a BWP; an SCS; and an absolute value of a time length.

The present disclosure provides the possible content that the second information may include, which can indicate the time position of the carrier phase measurement, thereby improving the accuracy of carrier phase-based positioning.

It can be understood that the above-mentioned apparatus 200 may further include any possible modules such as a processing module and a receiving module, and the apparatus 300 may further include any possible modules such as a processing module and a sending module. Specifically, any addition or deletion of modules may be made according to actual circumstances, which is not limited by the present disclosure.

Regarding the apparatus in the above embodiments, the specific manners in which each module performs operations have been described in detail in the embodiments related to the method, and will not be elaborated herein.

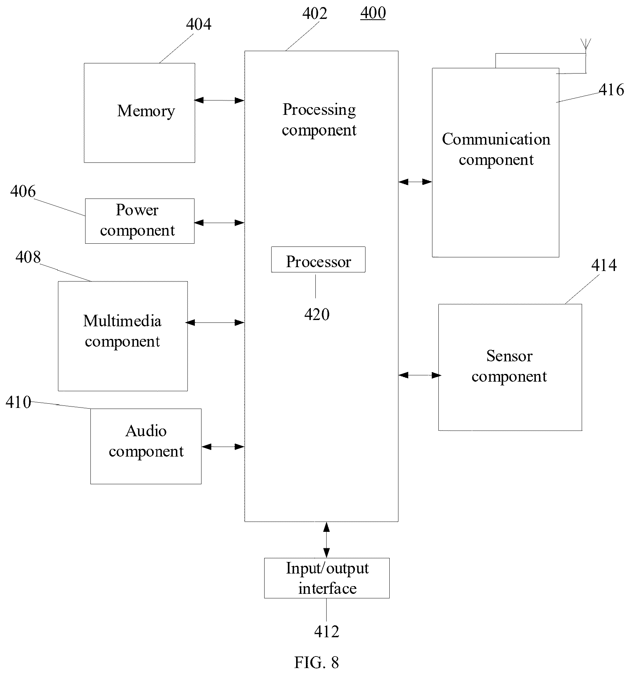

FIG. 8 is a schematic diagram of a communication device shown according to an exemplary embodiment. For example, the device 400 may be any terminal such as a mobile phone, a computer, a digital broadcasting terminal, a message receiving and transmitting device, a game console, a tablet device, a medical device, a fitness device, or a personal digital assistant, etc.

Referring to FIG. 8, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operation of the device 400, such as the operations associated with display, telephone calls, data communications, camera operations, and recording operations. The processing component 402 may include one or more processors 420 to execute instructions to complete all or part of the steps of the above-described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, videos, etc. The memory 404 may be implemented using any type of volatile or non-volatile memory devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the apparatus 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 408 includes a front camera and/or a rear camera. The front camera and/or the rear camera may receive external multimedia data while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone (MIC) configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide state assessments of various aspects of the device 400. For instance, the sensor component 414 may detect an open/closed state of the device 400, relative positioning of components, e.g., the display and the keypad of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an acceleration sensor, a gyroscope sensor, a magnetic sensor, a pressure sensor, or a temperature sensor.

The communication component 416 is configured to facilitate communication, wired or wirelessly, between the device 400 and other devices. The device 400 can access a wireless network based on a communication standard, such as WiFi, 2G or 3G, or a combination thereof. In an exemplary embodiment, the communication component 416 receives a broadcast signal or broadcast associated information from an external broadcast management system via a broadcast channel. In an exemplary embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as the memory 404 including instructions, executable by the processor 420 in the device 400, for completing the above methods. For example, the non-transitory computer-readable storage medium may be a ROM, a random access memory (RAM), a CD-ROM, a magnetic tape, a floppy disc, an optical data storage device, and the like.

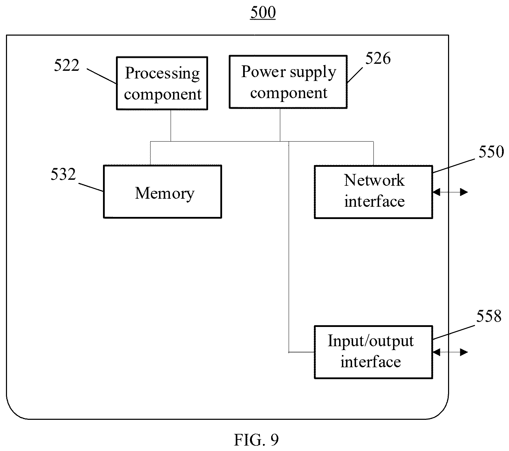

FIG. 9 is a schematic diagram of another communication device shown according to an exemplary embodiment. For example, device 500 may be provided as a base station, or a server. Referring to FIG. 7, the device 500 includes a processing component 522, which further includes one or more processors, and a memory resource represented by a memory 532 for storing instructions, such as an application program, that may be executed by the processing component 522. The application program stored in the memory 532 may include one or more modules, each corresponding to a set of instructions. In addition, the processing component 522 is configured to execute instructions to perform any of the aforementioned methods.

The device 500 may further include a power supply component 526 configured to perform power management of the device 500, a wired or wireless network interface 550 configured to connect the device 500 to a network, and an input/output (I/O) interface 558. The device 500 may operate based on an operating system stored in the memory 532, such as a Windows Server^{™}, a Mac OS X^{™}, a Unix^{™}, a Linux^{™}, a FreeBSD^{™}, or the like.

In the present disclosure, a time stamp corresponding to carrier phase positioning is introduced to determine the symbol corresponding to the carrier phase measurement value. The carrier phase measurement value is then reported to the LMF, thereby improving the accuracy of carrier phase-based positioning.

It may be further understood that, in the present disclosure, "a plurality of" means two or more than two, and other quantifiers are similar thereto. "And/or" describes the association relationship of associated objects, which indicates that three relationships may exist. For example, A and/or B may represent: A exists alone, A and B exist at the same time, and B exists alone. The character "/" generally indicates that the associated objects before and after are in an "or" relationship. The singular forms of "a", "the" and "said" are also intended to include the plural forms, unless otherwise clearly indicated by the context.

It may be further understood that the terms "first", "second", etc. are used to describe various information, but such information should not be limited to these terms. These terms are only used to distinguish information of the same type from each other, and do not indicate a specific order or degree of importance. In fact, the expressions "first", "second", etc. can be used interchangeably. For example, without departing from the scope of the present disclosure, the first information can also be referred to as the second information, and similarly, the second information can also be referred to as the first information.

It can be further understood that the meanings of the terms such as "in response to" and "if" involved in the present disclosure depend on the context and the actual usage scenarios. For example, the term "in response to" used herein may be interpreted as "at the time of" or "when..." or "if" or "upon".

It can be further understood that, although the operations are described in a specific order in the drawings in the embodiments of the present disclosure, it should not be construed as requiring the operations to be performed in the specific order shown or in a sequential order, nor as requiring the execution of all the operations shown to obtain the desired result. In certain environments, multitasking and parallel processing may be advantageous.

Those skilled in the art will readily appreciate other implementation solutions of the present disclosure after considering the specification and practicing the disclosure disclosed herein. The present disclosure is intended to cover any variations, uses or adaptations of the present disclosure that follow the general principles of the present disclosure and include common knowledge or customary technical means in the art that are not disclosed in the present disclosure.

It should be understood that the present disclosure is not limited to the exact structures that have been described above and shown in the accompanying drawings, and various modifications and changes may be made without departing from the scope thereof. The scope of the present disclosure is limited only by the appended claims.

## Claims

1. A communication method, performed by a first device, comprising:
sending first information, wherein the first information comprises a carrier phase measurement value and a time stamp.

2. The method according to claim 1, wherein the time stamp comprises a slot identifier, and a symbol corresponding to the carrier phase measurement value is a specified symbol.

3. The method according to claim 2, wherein the specified symbol comprises at least one of:
a first symbol where a reference signal resource is located;
a last symbol where the reference signal resource is located;
an N-th symbol where the reference signal resource is located, wherein N is a positive integer greater than 1, and N is less than a total number of symbols where the reference signal resource is located;
a first symbol of a slot corresponding to the slot identifier;
a last symbol of the slot corresponding to the slot identifier; and
an M-th symbol of the slot corresponding to the slot identifier, wherein M is a positive integer greater than 1, and M is less than a total number of symbols of the slot corresponding to the slot identifier.

4. The method according to claim 1, wherein the time stamp includes a slot identifier and a symbol identifier, and a symbol corresponding to the carrier phase measurement value is a symbol corresponding to the symbol identifier.

5. The method according to any one of claims 1 to 4, wherein the first device is a terminal, and the carrier phase measurement value comprises at least one of:
a downlink reference signal carrier phase (DL RSCP); and
a downlink reference signal carrier phase difference (DL RSCPD).

6. The method according to any one of claims 1 to 4, wherein the first device is an access network device, and the carrier phase measurement value comprises an uplink reference signal carrier phase (UL RSCP).

7. The method according to claim 5, further comprising:
sending second information, wherein the second information is used to indicate a capability of the terminal to measure a carrier phase.

8. The method according to claim 7, wherein the second information comprises at least one of:
a number of symbols required for obtaining the carrier phase measurement value; and
a minimum number of symbols occupied by a downlink reference signal.

9. The method according to claim 8, wherein the second information further comprises at least one of:
a bandwidth part (BWP);
a subcarrier spacing (SCS); and
an absolute value of a time length.

10. A communication method, performed by a second device, comprising:
receiving first information sent by a first device, wherein the first information comprises a carrier phase measurement value and a time stamp.

11. The method according to claim 10, wherein the time stamp comprises a slot identifier, and a symbol corresponding to the carrier phase measurement value is a specified symbol.

12. The method according to claim 11, wherein the specified symbol comprises at least one of:
a first symbol where a reference signal resource is located;
a last symbol where the reference signal resource is located;
an N-th symbol where the reference signal resource is located, wherein N is a positive integer greater than 1, and N is less than a total number of symbols where the reference signal resource is located;
a first symbol of a slot corresponding to the slot identifier;
a last symbol of the slot corresponding to the slot identifier; and
an M-th symbol of the slot corresponding to the slot identifier, wherein M is a positive integer greater than 1, and M is less than a total number of symbols of the slot corresponding to the slot identifier.

13. The method according to claim 10, wherein the time stamp includes a slot identifier and a symbol identifier, and a symbol corresponding to the carrier phase measurement value is a symbol corresponding to the symbol identifier.

14. The method according to any one of claims 10 to 13, wherein the first device is a terminal, the second device is a core network device, and the carrier phase measurement value comprises at least one of:
a downlink reference signal carrier phase (DL RSCP); and
a downlink reference signal carrier phase difference (DL RSCPD).

15. The method according to any one of claims 10 to 13, wherein the first device is an access network device, the second device is a core network device, and the carrier phase measurement value comprises an uplink reference signal carrier phase (UL RSCP).

16. The method according to any one of claims 10 to 13, wherein the first device is a terminal, and the second device is an access network device or a core network device, and the method further comprises:
receiving second information, wherein the second information is used to indicate a capability of the terminal to measure a carrier phase.

17. The method according to claim 16, wherein the second information comprises at least one of:
a number of symbols required for obtaining the carrier phase measurement value; and
a minimum number of symbols occupied by a downlink reference signal.

18. The method according to claim 17, wherein the second information further comprises at least one of:
a bandwidth part (BWP);
a subcarrier spacing (SCS); and
an absolute value of a time length.

19. A communication apparatus, comprising:
a sending module, configured to send first information, wherein the first information comprises a carrier phase measurement value and a time stamp.

20. A communication apparatus, comprising:
a receiving module, configured to receive first information sent by a first device, wherein the first information comprises a carrier phase measurement value and a time stamp.

21. A communication device, comprising:
a processor; and
a memory for storing instructions executable by the processor;
wherein the processor is configured to execute the method according to any one of claims 1 to 9.

22. A communication device, comprising:
a processor; and
a memory for storing instructions executable by the processor;
wherein the processor is configured to execute the method according to any one of claims 10 to 18.

23. A non-transitory computer-readable storage medium, wherein instructions in the storage medium, when executed by a processor of a first device, cause the first device to execute the method according to any one of claims 1 to 9.

24. A non-transitory computer-readable storage medium, wherein instructions in the storage medium, when executed by a processor of a second device, cause the second device to execute the method according to any one of claims 10 to 18.
